# EUROPEAN PATENT APPLICATION

(11) **EP 1 289 231 A2**
(43) Date of publication of application: **05.03.2003**
(21) Application number: 02255987.6
(22) Date of filing: 29.08.2002
(51) Int. Cl.: H04L 29/06, H04L 29/12, H04Q 7/22

(54) **Stateful load balancing**

(30) Priority: 31.08.2001 US 945132
(71) Applicant: Openwave Systems Inc., Redwood City, CA 94063 (US)
(72) Inventor: King, Peter F., Half Moon Bay, California 94019 (US); Clarke, Seamus, Banbridge, Northern Ireland BT32 3LT (GB)
(74) Representative: Cross, Rupert Edward Blount

(57) **Abstract**

A system and method of determining a client ID is disclosed. First, a request is received from a user terminal (102). The client ID for the first user terminal (102) is extracted from the request. This step includes extracting a session ID from the request being a WTLS handshake. A system and method of balancing a data load on a network (108) is also disclosed. First a request is received from a client. Next, an agent (120,121,122) is assigned to the client if the request includes a WSP connect, a WSP resume or a WTLS handshake.

## Description

### FIELD OF THE INVENTION

The present invention relates to systems and methods of data transmission in a network and more particularly to a method an apparatus for balancing a data transmission load in a network.

### BACKGROUND OF THE INVENTION

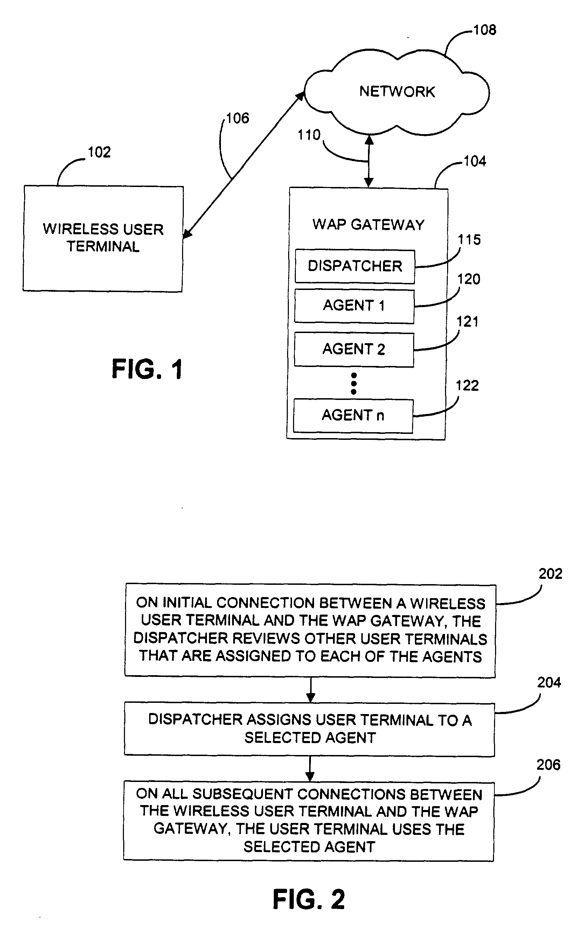

Fig. 1 shows one prior art data transmission architecture. A user terminal (UT) 102 is connected to a wireless access protocol (WAP) gateway 104 via a network 108 that provides mobile access. The network 108 can also connect the UT 102 to additional gateways (not shown) via a wired and/or a wireless network.

WAP is a method that allows users to access information via handheld wireless devices such as mobile phones, pagers, two-way radios, smartphones, communicators, personal digital assistants (PDAs) and other mobile user terminals. WAP also supports most wireless networks, such as the cellular digital packet data (CDPD), the code-division multiple access (CDMA), the global system for mobile communications (GSM), the personal digital cellular (PDC) network, the personal handy-phone system (PHS), the time division multiple access (TDMA), the FLEX and ReFLEX paging standards, the iDEN cellular/two-way radio network, the terrestrial trunked radio (TETRA) network, digital enhanced cordless telecommunications (DECT) network, the DataTAC messaging network, and Ericsson's wireless data transmission system known as Mobitex.

Handheld wireless or mobile devices that use displays and access the Internet typically run what are referred to as microbrowsers. Microbrowsers are browsers designed to cope with the limitations of wireless devices and the wireless environment, i.e. small memory capacities and limited display capabilities of wireless devices, and the typically low-bandwidth constraints of a wireless-handheld network.

The data stream 106 from the UT 102 includes data that has been processed through a "WAP stack". A network stack such as the WAP stack is a set of network protocol layers that work together to enable data transmission across the wireless network.

The WAP stack can include a browser, a wireless session protocol (WSP), a wireless transport protocol (WTP), a wireless transport layer security (WTLS) and a wireless datagram protocol (WDP).

Wireless transport protocol (WTP) provides reliable transmission of WSP data packets between the client and server over a wireless link. WTP is analogous to transmission control protocol (TCP). WTP is responsible for packet segmentation and reassembly and for acknowledgement of packets and retransmission of lost, unacknowledged, or corrupted packets.

WTLS is the security layer of the WAP stack, providing privacy, data integrity and authentication for WAP services. WTLS is designed specifically for the wireless environment and is needed because the client and the server must be authenticated in order for wireless transactions to remain secure and because the connection needs to be encrypted. For example, a user making a transaction with a bank over a wireless device needs to know that the connection is secure and private and not subject to a security breach during transfer (sometimes referred to as a man in the middle attack). WTLS is also needed because mobile networks do not provide complete end-to-end security.

Wireless datagram protocol (WDP) provides a network and bearer independent interface to higher layers. The WDP also provides port level addressing and segmentation and reassembly. For networks that support IP, UDP is often used as the WDP layer.

The gateway 104 includes a dispatcher 115. The dispatcher 115 distributes the data traffic between the network 108 and the UT 102 among several agents 120, 121, 122. The agents 120, 121, 122 maybe included in the gateway 104 or maybe in other servers. Multiple agents 120, 121, 122 are used so that one dispatcher 115 can be scaled to dispatch data traffic to ever greater numbers of user terminals.

Fig. 2 illustrates one prior art method of assigning a user terminal to a selected agent. As shown in block 202, when the UT 102 first logs into the network 108, the dispatcher 115 reviews the traffic load assigned to each of the agents 120, 121, 122. The traffic load can include the number of other user terminals that are assigned to each of the agents 120, 121, and 122. The dispatcher then assigns a selected agent (i.e. agent 122) to the UT 102 in block 204. Thereafter, during the lifetime of the session, in all subsequent occasions whenever the UT 102 logs onto the network 108, the selected agent 122 always handles the data traffic to and from the UT 102. The lifetime of the session varies. The session often lasts several weeks and can be terminated due to being "torn down" for various reasons. The gateway 104 can tear down a session that has not been used for a long period. The user terminal 102 can initiate a tear down and a new session due to various changes in the user terminal 102. The session can be torn down for many other reasons also.

Unfortunately, under the above-described system the traffic load on the selected agent 122 can increase at anytime during the session. Thereafter, the traffic load through the selected agent 122 may become excessively heavy and cannot be reallocated until the individual sessions for each UT are torn down. When the traffic load through the selected agent 122 becomes too heavy, excessive data delays and/or data loss can occur which can degrade the net data transmission rate to the UT 102.

### SUMMARY OF THE INVENTION

A system and method of determining a client ID is disclosed. First, a request is received from a user terminal. The client ID for the first user terminal is extracted from the request. A system and method of balancing a data load on a network is also disclosed. First a request is received from a client. Next, an agent is assigned to the client if the request includes a WSP connect, a WSP resume or a WTLS handshake.

In one embodiment, the data traffic of a session between a user terminal and a mobile network is assigned to one of a group of available agents. Once the user terminal is assigned to an agent, the agent is assigned to the user terminal until the session has ended. In another embodiment, another agent is assigned to the user terminal when certain specific WAP conditions occur.

### BRIEF DESCRIPTION OF THE DRAWINGS

The present invention is illustrated by way of example and not limitation in the figures of the accompanying drawings in which like references indicate similar elements.

Fig. 1 shows one prior art data transmission architecture.

Fig. 2 illustrates one prior art method of assigning a user terminal to a selected agent.

Fig. 3 illustrates one example of a web-enabled cellular telephone 300.

Fig. 4 shows one embodiment of a network environment for a mobile user terminal.

Fig. 5 is a block diagram showing the principle components of user terminal 500 of one embodiment.

Fig. 6 is a high-level block diagram of a computer system representative of any or all of the servers shown in Fig. 4.

Fig. 7 illustrates one embodiment of a method of balancing a data load on a network.

Fig. 7A illustrates one embodiment of determining the source address and the source port from a request that includes a WSP connect or a WSP resume.

Fig. 7B illustrates another embodiment of determining the source address and the source port from a request that includes a WTLS handshake.

Fig. 7C illustrates one embodiment of dynamically balancing a data traffic load.

Fig. 7D shows one embodiment of a circuit switched network.

Fig. 7E shows one method of assigning an agent in a circuit switched network.

Fig. 8 illustrates one embodiment of a method of determining a client ID.

### DETAILED DESCRIPTION

A system and method of dynamically balancing the data traffic load across multiple network servers is described herein. In one embodiment, an additional server is interposed into the data traffic route to dynamically redirect the data traffic to balance the load. In another embodiment, a system and method of extracting a client ID from a portion of the data traffic through a processor such as a gateway or a front-end processor is described.

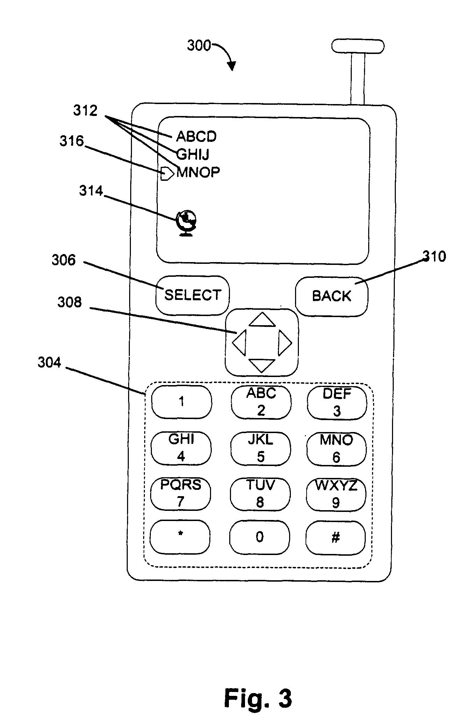

Fig. 3 illustrates one example of a web-enabled cellular telephone 300 that can be used as a mobile user terminal to access a desired web page on the Internet. The web-enabled cellular telephone 300 includes a display screen 302, an alphanumeric keypad 304 and navigational buttons 306, 308, 310. As shown, the display screen 302 displays a page of information. The page includes data elements including text 312, an icon 314 and a cursor 316. Each one of the data elements 312, 314 on the displayed page, is typically a link or hyperlink to another page of information or an address or phone number or other data. The data elements 312, 314 can alternatively link to applications such as email or a phonebook or an addressbook or other applications. The keypad 304 includes several keys (i.e. keys "1-9", "0", "*" and "#") for data entry. The navigation buttons 306, 308, 310 include a select button 306, a cursor movement button 308 and a back navigational button 310. The cursor movement button 308 allows a user to move the cursor 316 from one text entry 312 or icon 314 to the next. The select button 306 activates the selected the text entry 312 or icon 314 that was selected by the cursor 316. The back navigational button 310 causes a page that was displayed immediately before the currently displayed page to be displayed on the screen 302.

A mobile telephone is one possible user terminal that is used to describe the present invention, however, the present invention is not limited to mobile telephones. The technique described herein may be used in any type of user terminal, such as handheld personal computers, personal computers, laptop personal computers, pagers, personal digital assistants (PDAs), telephones, or any similar electronic devices.

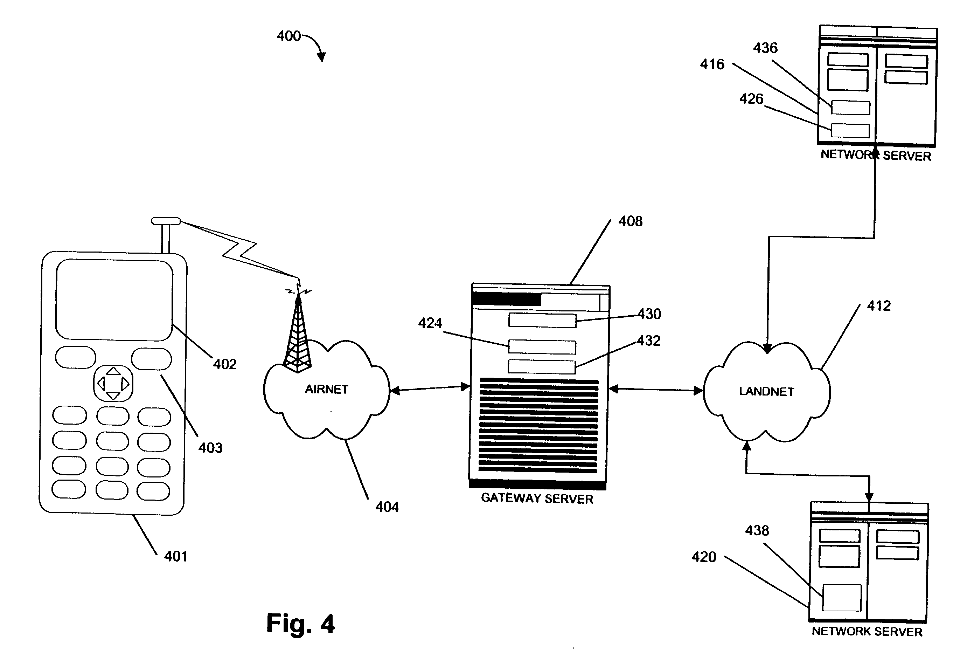

Fig. 4 shows one embodiment of a network environment in which a mobile user terminal (or simply user terminal), such as described in Fig. 3 above, can be used. User terminal 400 may be of any of the types of user terminal mentioned above, such as a mobile telephone. To facilitate explanation, the example of a mobile telephone is used at various points in the following description. As described herein, user terminal 401 is enabled to receive remotely stored hypermedia information, such as Wireless Markup Language (WML) documents, HTML documents, Compact HTML (cHTML) documents, Extensible Markup Language (XML) documents, or Handheld Device Markup Language (HDML) documents, from one or more network servers, shown as network servers 416 and 420. Network Servers 416 and 420 may be, for example, conventional server-class computers, personal computers (PCs) or computer workstations. User terminal 401 has a display 402 and a keypad 403. The user terminal 401 can include a micro-browser capable of accessing and displaying hypermedia content, such as WML cards, HTML pages, or the like.

The communication path between user terminal 401 and network servers 416 and 420 includes a wireless communication network ("aimet") 404, a gateway server 408, and a land-based network ("landnet") 412. Aimet 404 is a network such as a Cellular Digital Packet Data (CDPD) network, a Global System for Mobile (GSM) network, a Code Division Multiple Access (CDMA) network, or a Time Division Multiple Access Network (TDMA) network. The communications protocols used by aimet 404 may include, for example, WAP, HDTP, Transmission Control Protocol (TCP/IP), HTTP, and/or SSL/TLS+ HTTP (HTTP over secure sockets layer (SSL)). Landnet 412 is a land-based network that may be or include the Internet, an Intranet, or a data network of any private network, such as a Local Area Network (LAN). The communication protocol supporting landnet 412 may be, for example, TCP/IP, HTTP, or HTTP over SSL.

A proxy or gateway server 408 acts as a bridge between airnet 404 and landnet 412. Gateway server 408 may be, for example, a conventional computer workstation or PC or a server class computer. Although shown as a physically separate device, proxy server 408 may be implemented in a network server (e.g. network servers 416 or 420) with hardware and software such as well known in the art providing the connection between airnet 404 and landnet 412. Gateway server 408 can be substantially the same as network servers 416 and 420, except that it also includes features of the present invention described herein.

In one embodiment, the gateway server can also include a front-end processor (FEP) 424. The FEP 424 can perform preliminary functions on the data traffic passing through the FEP. Alternatively, the FEP 426 can be in one or more of the network servers 416, 420. The gateway 408 can also include a dispatcher 430 such as the dispatcher 115 shown in Fig. 1 above. Also as described in Fig. 1 above, the gateway 408 can also include multiple agents 432. Alternatively, all or a portion of the agents can be in one or more of the network servers 416, 420 such as agents 436, 438 respectively.

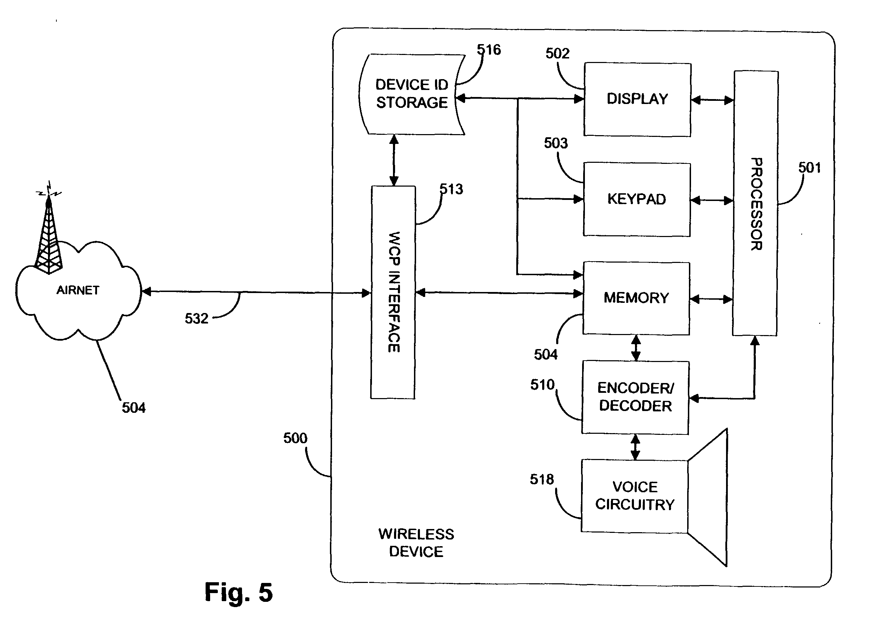

Fig. 5 is a block diagram showing the principle components of user terminal 500 of one embodiment. The user terminal 500 includes a processor 501, which may be or may include any of a general or special purpose programmable microprocessor, Digital Signal Processor (DSP), Application Specific Integrated Circuit (ASIC), Programmable Logic Array (PLA), Field Programmable Gate Array (FPGA), etc., or a combination thereof. User terminal 500 includes a Wireless Control Protocol (WCP) interface 513 that couples to a carrier network via airnet 504 to receive incoming and outgoing signals. In one embodiment, a device identifier (ID) storage 516 stores and supplies to WCP interface 513 a Mobile Device Identifier (MIN), which identifies user terminal 500 to outside entities (e.g. gateway server 408 a client, a server, or other network device). The MIN is a specific code that is associated with user terminal 500 and directly corresponds to a device ID in a user account typically provided in an associated gateway server, such as gateway server 408. If the gateway server services a number of wireless devices, there will be a number of such accounts, preferably kept in a database server, each of the accounts corresponding to a different one of the wireless devices.

In addition, user terminal 500 includes memory 504 that stores data and/or software for controlling and/or performing many of the processing tasks performed by user terminal 500. These tasks include: establishing a communication session with a gateway server via wireless link 532 and airnet 504; receiving user inputs from keypad 503, and displaying information on the display 502. Hence, memory 504 may represent one or more physical memory devices or facilities, which may include any type of Random Access Memory (RAM), read-only Memory (ROM) (which may be programmable), flash memory, non-volatile mass storage device, or a combination of such memory devices. Memory 504 is also coupled to WCP interface 513 for the establishment of a communication session and the requesting and receiving of data.

Assuming, for example, that user terminal 500 is a telephone, user terminal 500 also includes voice circuitry 518 for inputting and outputting audio during a telephonic communication between the user of user terminal 500 and a remote party. Voice circuitry 518 may include, for example, sound transducers, analog-to-digital (A/D) and digital-to-analog (D/A) converters, filters, etc., such as are well known in the art. An encoder/decoder 510 is coupled between the processor 501 and the voice circuitry 518 for encoding and decoding audio signals.

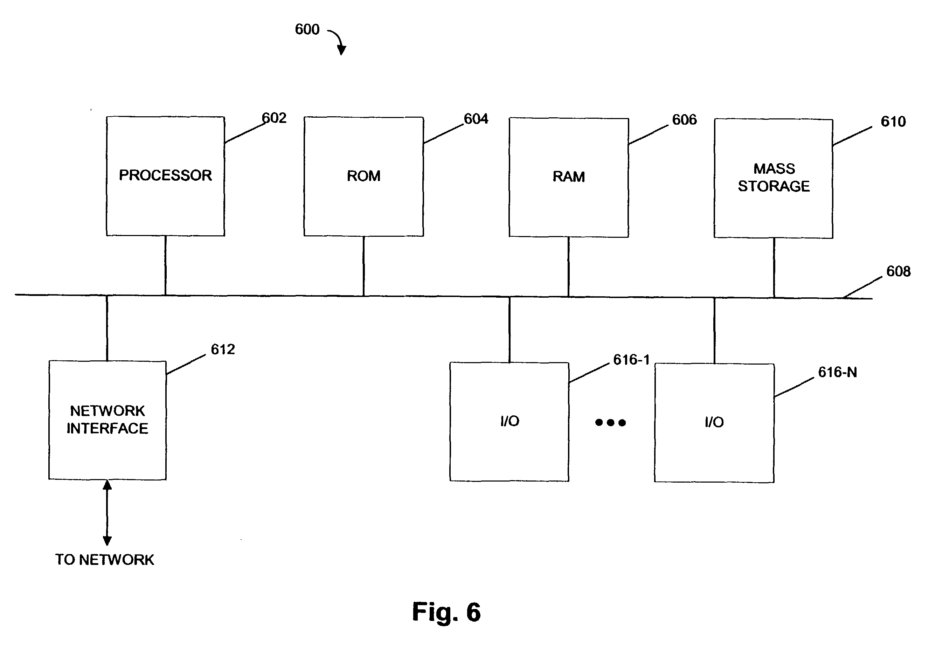

Fig. 6 is a high-level block diagram of a computer system representative of any or all of the servers shown in Fig. 4, i.e., gateway server 408 and network servers 416 and 420. As shown, the computer system includes a processor 602, ROM 604, and RAM 606, each connected to a bus system 608. The bus system 608 may include one or more buses connected to each other through various bridges, controllers and/or adapters, such as are well known in the art. For example, the bus system 608 may include a "system bus" that is connected through an adapter to one or more expansion buses, such as a Peripheral Component Interconnect (PCI) bus. Also coupled to the bus system 608 are a mass storage device 610, a network interface 612, and a number (N) of input/output (I/O) devices 616-1 through 616-N.

I/O devices 616-1 through 616-N may include, for example, a keyboard, a pointing device, a display device and/or other conventional I/O devices. Mass storage device 610 may include any suitable device for storing large volumes of data, such as a magnetic disk or tape, magneto-optical (MO) storage device, or any of various types of Digital Versatile Disk (DVD) or Compact Disk (CD) based storage.

Network interface 612 provides data communication between the computer system and other computer systems such as on the landnet 412 or on the airnet 404 of Fig. 4. Hence, network interface 612 may be any device suitable for or enabling the computer system 600 to communicate data with a remote processing system over a data communication link, such as a conventional telephone modem, an Integrated Services Digital Network (ISDN) adapter, a Digital Subscriber Line (DSL) adapter, a cable modem, a satellite transceiver, an Ethernet adapter, or the like.

Of course, many variations upon the architecture shown in Fig. 6 can be made to suit the particular needs of a given system. Thus, certain components may be added to those shown in Fig. 6 for given system, or certain components shown in Fig. 6 may be omitted from the given system.

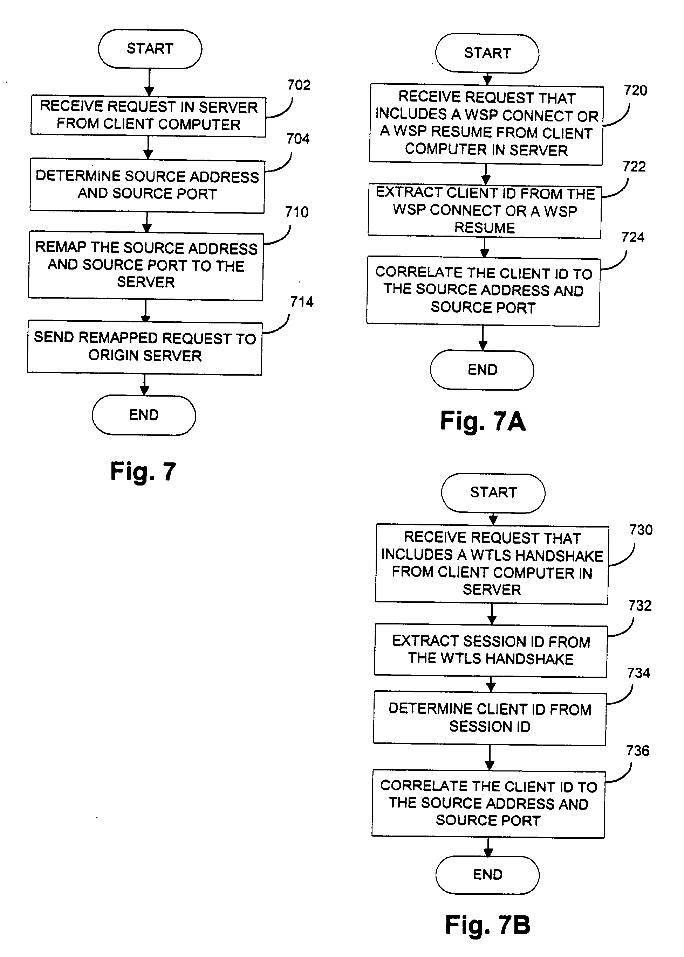

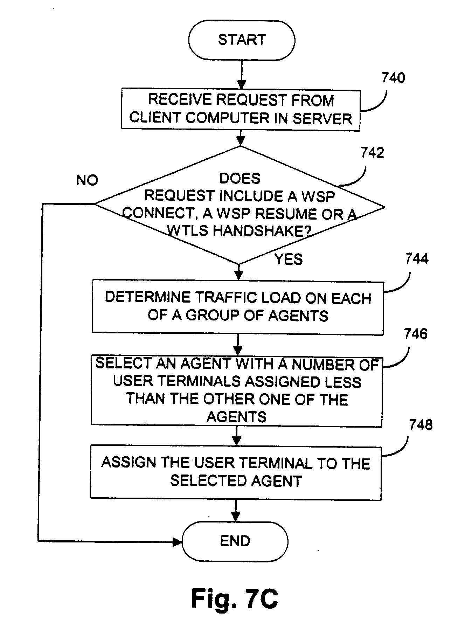

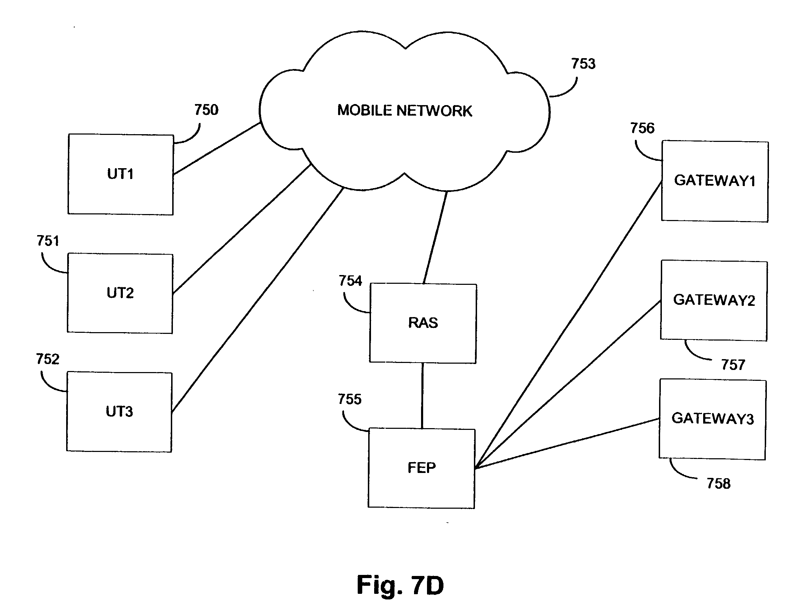

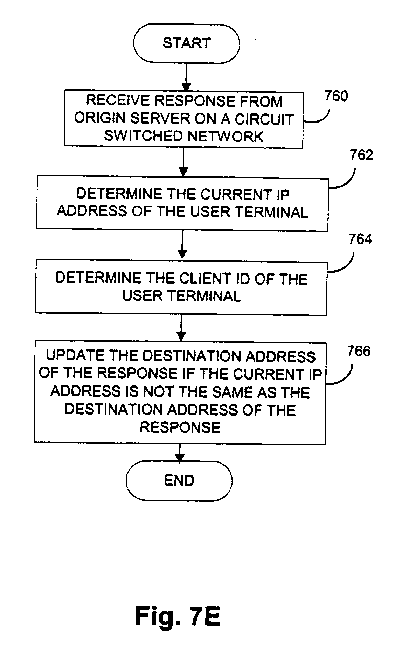

Fig. 7 illustrates one embodiment of a method of balancing a data load on a network. First in block 702, a request is received in a server, such as a gateway server, from a client computer, such as a user terminal. A source address and a source port are determined from the request in block 704. The source address and source port of the request are then remapped to a front-end processor source address and source port, respectively, in block 710. The remapped request is then sent to an origin server i.e. a server on the network that contains the data requested in the request in block 714.

For example, in a request from a client for data from an origin server A1 has the following addresses and ports:
source address = client X
destination address = FEP
source port = 52000 and
destination port is 9201.

The FEP receives the request and remaps the request to have the following addresses and ports:
source address = FEP
destination address = A1
source port = 55000
destination port = 9201

The request is then forwarded to the origin server Al. The response is similarly redirected through the FEP as follows. The response has the following settings from the origin server A1:
source address = A1
destination address = FEP
source port = 9201
destination port = 55000

The FEP receives the response from the origin server A1 and remaps the response to the client X as follows:
Source address = FEP
destination address = client X
source port = 9201
destination port = 52000

In an alternative embodiment, the source address and destination address can also be an IP address or a telephone number. The FEP can record a table to track the correct remapping settings for each client.

There are various methods of determining the source address and the source port from the request. Fig. 7A illustrates one embodiment of determining the source address and the source port from a request that includes a WSP connect or a WSP resume in block 720. Because a client ID is sent in the clear as part of a WSP connect and/or a WSP resume, the client ID can be extracted from the request as shown in block 722. The client ID can then be correlated to the source address and the source port in block 724.

Fig. 7B illustrates another embodiment of determining the source address and the source port from a request that includes a WTLS handshake. There are two types of WTLS handshakes: a full WTLS handshake and an abbreviated WTLS handshake. A session ID is extracted from a WTLS handshake in block 732. The session ID is correlated to a client ID in block 734. The client ID is then correlated to the source address and the source port in block 736.

In one embodiment, the FEP determines the source address and the source port of the request as described above in Figs. 7A-7B.

In one embodiment, the source address is remapped to the source address of a front-end processor. The source address and the corresponding front-end processor source address are stored. The source port and the corresponding front-end processor source port are stored. One effective method stores the corresponding source address and source port and the respective front-end processor source address and source port in a table.

Fig. 7C illustrates one embodiment of dynamically balancing a data traffic load. In one embodiment, if the request received in block 740, includes either of a WSP connect, a WSP resume, or a WTLS handshake, in block 742, then the data traffic load is dynamically balanced. Dynamically balancing the data traffic load includes assigning the user terminal to one of a group of agents, such that the data load is substantially balanced across the group of agents. In one embodiment the load is balanced by examining each of the agents and determining the number of other user terminals that have been previously assigned to each of the agents in blocks 744, 746. The user terminal is then assigned to an agent that has a lesser number of other user terminals that were previously assigned than the other agents in block 748. Dynamically balancing the load provides a significantly more balanced usage of the group of agents over the prior art methods of permanently assigning the user terminal to an agent as described in Fig. 2 above.

One method of distributing the load across the group of agents is to remap the source address of the request to the selected agent's source address. The source port of the request is also remapped to the selected agent source port.

When a response to a remapped request is received from an origin server such as a network server, the response must be remapped and forwarded to the user terminal. The response is received in the FEP because the request was remapped to the FEP. The received response is then remapped so that the origin server response source address is remapped to the FEP source address. The origin server response source port is also remapped to the to the FEP source port. The remapped response is then sent to the user terminal. Alternatively, if the request was remapped to the selected agent, then the origin response to the remapped request must be similarly remapped to the selected agent's source address and port.

Fig. 7D shows one embodiment of a circuit switched network. Multiple user terminals (UTs) 750, 751, 752 are connected to a mobile network 753. The mobile network 753 is then coupled to a remote access server 754. The remote access server (RAS) 754 is coupled to a front-end processor 755. The front-end processor 755 is coupled to a network with multiple gateway servers 756, 757, 758. The remote access server 754 dynamically assigns IP addresses to the UTs 750, 751, 752 as the UTs connect and reconnect to the mobile network 753.

For example, first UT 750 connects to the mobile network 753 at a first time, t0. The RAS 754 assigns an IP address of 1.1.11 to the first UT 750. Next, at a time t1, the second UT 751 connects to the mobile network 753 and the RAS 754 assigns an IP address of 1.1.1.2 to the second UT 751. Next, at time t2, the first UT 750 requests data from an origin server such as gateway server 757. Next, before a response to the request from the first UT 750 is received, the connection between the first UT 750 and the mobile network 753 is severed. The connection can be severed for many reasons, for example, because the first UT 750 is mobile and may have moved into a location that does not allow a connection with the mobile network 753 to be maintained. Next, at time t3, third UT 752 connects to the mobile network 753 and the RAS 754 assigns an DP address of 1.1.1.1 to the third UT 752. Next, the first UT 750 connects to the mobile network 753 at a time, t4. The RAS 754 assigns an IP address of 1.1.1.3 to the first UT 750. At time t5 a response to the request from the first UT 750 for data from an origin server such as gateway server 757 is received in the front-end processor 755. The front-end processor 755 must properly redirect the response to the correct UT even though the correct UT does not have the same IP address.

Fig. 7E shows one method of determining a correct IP address for a user terminal in a circuit switched network. First, a response to the request from a mobile user terminal is received from an origin server, over a circuit switched network in block 760. Next, the IP address for the mobile user terminal is determined in block 762.

In one embodiment of determining the IP address of the mobile user terminal, the client ID of the mobile user terminal is determined in block 764. Then, if the current IP address assigned to the mobile user terminal is not the same as the destination address of the response, then the destination address of the response is updated in block 766. In one embodiment the FEP can determine the IP address assigned to the mobile user terminal.

Alternatively, the client ID of the mobile user terminal can be determined by extracting the client ID from the response. One method of extracting the client ID includes extracting the client ID as described above from a WSP connect, a WSP resume, or a WTLS handshake in the response.

Fig. 8 illustrates one embodiment of a method of determining a client ID. First, a request is received from a user terminal in block 802. Next, the client ID for the first user terminal is extracted from the request in block 810. In one alternative, the request is received in a front-end processor. In various embodiments the client ID can be determined from a WTLS full handshake, a WTLS abbreviated handshake, a WSP connect or a WSP resume as described above, if the WAP stack includes the WTLS full handshake, the WTLS abbreviated handshake, the WSP connect or the WSP resume.

It will be further appreciated that the instructions represented by the blocks in Figs. 7-8 are not required to be performed in the order illustrated, and that all the processing represented by the blocks may not be necessary to practice the invention.

One of skill in the art will immediately recognize that the term "computer-readable medium/media" further encompasses a carrier wave that encodes a data signal.

One skilled in the art will immediately appreciate that the invention can be practiced with other computer system configurations, including multiprocessor systems, minicomputers, mainframe computers, and the like. The invention can also be practiced in distributed computing environments where tasks are performed by remote processing devices that are linked through a communications network.

In the foregoing specification, the invention has been described with reference to specific exemplary embodiments thereof. It will be evident that various modifications may be made thereto without departing from the broader spirit and scope of the invention as set forth in the following claims. The specification and drawings are, accordingly, to be regarded in an illustrative sense rather than a restrictive sense.

## Claims

1. A method of determining a client ID comprising:
receiving a request from a first user terminal; and
extracting a client ID from the request, wherein the client ID includes the client ID for the first user terminal.

2. The method of claim 1 wherein the request is received in a front-end processor.

3. The method of claim 1 wherein the request includes a WTLS handshake and wherein extracting a client ID for the first user terminal includes:
extracting a session ID from the WTLS handshake; and
determining the client ID from the session ID.

4. The method of claim 3 wherein the WTLS handshake includes a WTLS full handshake.

5. The method of claim 3 wherein the WTLS handshake includes a WTLS abbreviated handshake.

6. The method of claim 1 wherein the request includes a WSP connect and wherein extracting a client ID for the first user terminal includes extracting the client ID from the WSP connect.

7. The method of claim 1 wherein the request includes a WSP resume and wherein extracting a client ID for the first user terminal includes extracting the client ID from the WSP resume.

8. A method of balancing a data load on a network comprising:
receiving a request from a client;
determining a first source address and a first source port from the request;
remapping the first source address of the request to a front-end processor source address;
remapping the first source port of the request to an front-end processor source port; and
sending the remapped request to an origin server.

9. The method of claim 8, wherein determining a first source address and a first source port from the request includes:
receiving a WSP connect; and
extracting a client ID from the WSP connect.

10. The method of claim 8, wherein determining a first source address and a first source port from the request includes:
receiving a WSP resume; and
extracting a client ID from the WSP resume.

11. The method of claim 8, wherein determining a first source address and a first source port from the request includes:
receiving a abbreviated WTLS handshake;
extracting a session ID from the abbreviated WTLS handshake; and
determining the client ID from the session ID.

12. The method of claim 8, wherein determining a first source address and a first source port from the request includes:
receiving a full WTLS handshake;
extracting a session ID from the full WTLS handshake; and
determining the client ID from the session ID.

13. The method of claim 8, wherein remapping the first source address of the request to a front-end processor source address includes:
storing the first source address and the corresponding front-end processor source address; and
storing the first source port and the corresponding front-end processor source port.

14. The method of claim 13, wherein storing includes storing the corresponding source addresses and the corresponding source ports in a table.

15. The method of claim 8, wherein:
if the request includes at least one of a group consisting of a WSP connect, a WSP resume, and a WTLS handshake, then:
assigning the client to a selected agent of a plurality of agents, such that a data load is substantially balanced across the plurality of agents.

16. The method of claim 8, further comprising:
receiving a response from the origin server, wherein the response is responding to the remapped request and wherein the response is received in the front-end processor;
remapping the origin server response source address to the front-end processor source address;
remapping the origin server response source port to the front-end processor source port; and
sending the remapped response to the client.

17. The method of claim 8, wherein remapping the first source address of the request to the front-end processor source address includes remapping the first source idress of the request to a selected agent source address wherein the selected agent s one of a plurality of agents; and
wherein remapping the first source port of the request to the front-end processor source port includes remapping the first source port of the request to the selected agent source port.

18. The method of claim 8, wherein the network includes a wireless network.

19. The method of claim 8, wherein the client is a mobile user terminal.

20. A method of assigning an agent comprising:
receiving a response from an origin server to a request from a first mobile user terminal, wherein the first mobile user terminal and the origin server are coupled by a circuit switched network; and
confirming an IP address for the first mobile user terminal including:
determining the client ID of the first mobile user terminal; and
comparing a current IP address assigned to the first mobile user terminal to the destination address of the response.

21. The method of claim 20 further comprising:
updating the destination address of the response if the destination address of the response is not the same as the current IP address assigned to the first mobile user terminal.

22. The method of claim 20 wherein the IP address is confirmed by a front-end processor.

23. The method of claim 20 wherein determining the client ID of the first mobile user terminal includes extracting the client ID from the response.

24. The method of claim 23 wherein extracting the client ID includes extracting the client ID from at least one of a group consisting of a WSP connect, a WSP resume, and a WTLS handshake.

25. A system for determining a client ID comprising
a processor;
a storage facility coupled to the processor and containing instructions executable by the processor which configure the processing system to
receive a request from a first user terminal; and
extract a client ID from the request, wherein the client ID includes the client ID for the first user terminal; and
a network coupled to the processor.

26. The system of claim 25 further comprising:
a front-end processor and wherein the request is received in the front-end processor.

27. The system of claim 25 wherein the request includes at least one of a group consisting of a WTLS handshake, a WSP connect, and a WSP resume.

28. A system for balancing a data load on a network comprising
a processor;
a network coupled to the processor;
a front-end processor coupled to the network;
a client coupled to the network; and
a storage facility coupled to the processor and containing instructions executable by the processor which configure the processing system to:
receive a request from the client;
determine a first source address and a first source port from the request;
remap the first source address of the request to a front-end processor source address;
remap the first source port of the request to an front-end processor source port; and
send the remapped request to an origin server.

29. The system of claim 28 wherein the determine a first source address and a first source port from the request includes:
receiving at least one of a group consisting of a WTLS handshake, a WSP connect, and a WSP resume.

30. The system of claim 28 wherein the determine a first source address and a first source port from the request includes:
receiving at least one of a group consisting of a WTLS handshake, a WSP connect, and a WSP resume.

31. The system of claim 28 wherein the remap the first source address of the request to a front-end processor source address includes:
storing the first source address and the corresponding front-end processor source address; and
storing the first source port and the corresponding front-end processor source port.

32. The system of claim 28 wherein the storage facility coupled to the processor and further contains instructions executable by the processor which configure the processing system to:
receive a response from the origin server, wherein the response is responding to the remapped request and wherein the response is received in the front-end processor;
remap the origin server response source address to the front-end processor source address;
remap the origin server response source port to the front-end processor source port; and
send the remapped response to the client.

33. The system of claim 28 wherein the remap the first source address of the request to a front-end processor source address includes remapping the first source address of the request to a selected agent source address wherein the selected agent is one of a plurality of agents; and
wherein remapping the first source port of the request to the front-end processor source port includes remapping the first source port of the request to the selected agent source port.

34. The system of claim 28, wherein the network includes a wireless network.

35. The system of claim 28, wherein the client is a mobile user terminal.

36. A system for assigning an agent comprising:
a processor;
a network coupled to the processor;
a front-end processor coupled to the network;
a client coupled to the network; and
a storage facility coupled to the processor and containing instructions executable by the processor which configure the processing system to
receive a response from an origin server to a request from a first mobile user terminal, wherein the first mobile user terminal and the origin server are coupled by a circuit switched network; and
confirm an IP address for the first mobile user terminal including:
determine the client ID of the first mobile user terminal; and
compare a current IP address assigned to the first mobile user terminal to the destination address of the response.

37. The system of claim 36 wherein the storage facility coupled to the processor and further contains instructions executable by the processor which configure the processing system to:
update the destination address of the response if the destination address of the response is not the same as the current IP address assigned to the first mobile user terminal.

38. The system of claim 36 wherein the IP address is confirmed by the front-end processor.

39. The system of claim 36 wherein the determine the client ID of the first mobile user terminal includes extracting the client ID from the response.

40. The system of claim 39 wherein extracting the client ID includes extracting the client ID from at least one of a group consisting of a WSP connect, a WSP resume, and a WTLS handshake.

41. A system for of determining a client ID comprising:
a means for receiving a request from a first user terminal; and
a means for extracting a client ID from the request, wherein the client ID includes the client ID for the first user terminal.

42. A system for balancing a data load on a network comprising:
a means for receiving a request from a client;
a means for determining a first source address and a first source port from the request;
a means for remapping the first source address of the request to a front-end processor source address;
a means for remapping the first source port of the request to an front-end processor source port; and
a means for sending the remapped request to an origin server.

43. A system for assigning an agent comprising:
a means for receiving a response from an origin server to a request from a first mobile user terminal, wherein the first mobile user terminal and the origin server are coupled by a circuit switched network; and
a means for confirming an IP address for the first mobile user termina[ terminal including:
a means for determining the client ID of the first mobile user terminal; and
a means for comparing a current IP address assigned to the first mobile user terminal to the destination address of the response.
